# EUROPEAN PATENT SPECIFICATION

(11) **EP 1 455 460 B1**
(45) Date of publication and mention of the grant of the patent: **11.12.2013**
(21) Application number: 04076628.9
(22) Date of filing: 23.04.2003
(51) Int. Cl.: H04B 1/40, H01Q 1/24

(54) **Improved portable telecommunication terminal**
Verbessertes tragbares Nachrichtenendgerät
Terminal de télécommunications portable et amélioré

(30) Priority: 23.04.2002 GB 0209267
(43) Date of publication of application: 08.09.2004
(62) Divisional of application: 03252561.0
(73) Proprietor: Hutchison Whampoa Three G IP (Bahamas) Limited, Nassau, New Providence (BS)
(72) Inventor: Efthymiou, Nektaria, Leatherhead, Surrey, KT22 8LZ (GB); Hepsaydir, Erol, Maidenhead, Berkshire SL6 5JP (GB)
(74) Representative: Patel, Nikesh

(56) References cited:
- EP-A- 0 926 838
- WO-A-01/26248
- US-A- 6 147 647
- US-B1- 6 223 053
- US-B1- 6 374 094

## Description

The present invention relates to portable telecommunication terminals with a plurality of transceiver chains for use in digital mobile communication networks.

### Background:

The current status of the telecommunications arena includes a number of different networks covering the same geographical area. For example, in Europe we will see during the next few years the co-existence of the Global System for Mobile communications (GSM) and the Universal Mobile Telecommunication System (UMTS) within the same geographical area. However, during the first years of the deployment of new networks, the coverage area of one network may be smaller than that of another network for mainly practical reasons, e.g. licences to build new sites. Moreover, even in later years, different networks will co-exist and it may appear necessary in some areas to share the traffic between two networks.

Therefore, in the coming years it will be common and perhaps sometimes necessary for portable telecommunications terminals, otherwise known as mobile terminals, to move from one network to another e.g. coverage area or load balancing reasons. Both these scenarios require an indication of the signal quality of the target network to switch to e.g. from 3G (UMTS) to 2G(GSM) or vice versa. The signal quality of the target network should be sufficiently good to maintain the signal quality so that the Quality of Service (QoS) is maintained. The mobile terminal transceiver needs to obtain synchronisation with the target network before the handover from the current network to the target network takes place. Single transceiver chain mobile terminals that will be able to switch from one network to another have been proposed. In order to check the quality of the target network, communication with the present network must be momentarily stopped. This causes degradation of the communication with the present network and this may be noticed by reduction in the quality of the sound in the case of a voice call. Various techniques are used to make the switch as smooth as possible, but these techniques can be complex and result in an increase in the cost of the mobile terminal. Mobile terminals with a plurality of transceiver chains where each transceiver chain will be used independently for each network have been proposed to try and over come the problems associated with single transceiver chain mobile terminals. Ideally, simultaneous communication with different networks should be possible without degradation of the quality of the communication with the present network as each transceiver chain works independently with its respective network. This results in the reduction of the complexity of the techniques involved in switching between different networks and hence a reduction of cost. However, in practice interference and coupling can occur between different transceivers especially when the frequency bands of the different networks are close and communication with one network may have to be momentarily stopped in order to check the quality of the target network. Similar techniques to those used in single transceiver chain terminals may then be required to improve the quality of the communication with the present network.

As an example of how this may be done and the problems that can be encountered we will consider mobile terminals operating with 2G and 3G networks. A mobile terminal that can operate with two networks such as 2G and 3G is called a dual mode terminal.

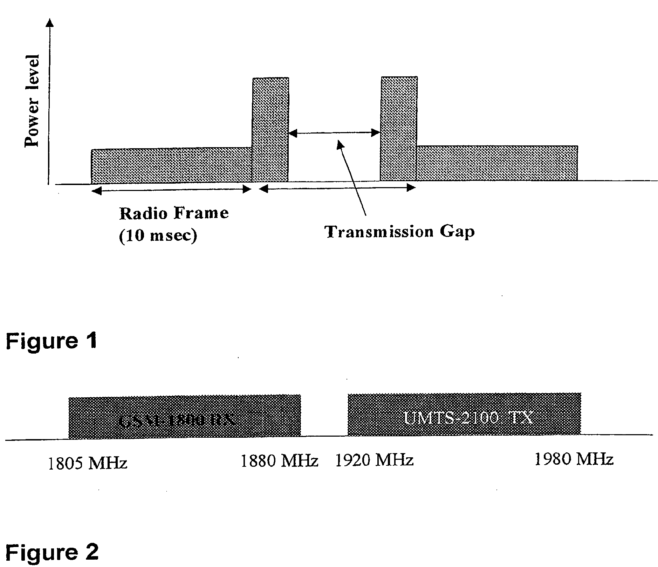

Assume the scenario of a dual mode mobile terminal using a 3G network operating at transmission frequencies around 2100MHz. Also assume that the 2G system operates at 1800 MHz frequency. Since the 2G frequency is close to the 3G transmitting frequency, interference will appear in the 2G reception if the dual mode terminal transmitting a 3G signal. As was mentioned before the dual mode terminal needs to perform measurements on the 2G system in order to be able to evaluate the signal quality and inform the 3 G network of the 2G signal quality for the case of a handover need. Due to the fact that the two frequencies are close, the terminal has to stop receiving and transmitting to the 3G network for a period of time, in order for the terminal to perform measurements on a 2G network. During this time period signal quality measurements can be made in the 2G network. After the expiration of this time period the mobile is switched back to the 3G network. The scheme used in dual mode terminals utilising 3G and 2G networks where the mobile stops listening to the current network for a period of time in order to perform signal quality measurements of the target network is known as compress mode (please refer to Figure 1 for an example of compress mode type). Compress mode can be applied separately for Uplink, UL and for Downlink, DL. The compress mode described in the above example is in the UL direction only. Compress mode operation has been specified in the 3gpp standards in detail. There are different types of compress mode specified. It is out of the scope of this invention to describe these types of compress mode in detail.

The use of compress mode method is obviously necessary for single transceiver chain terminals since there is only one receiver-transmitter chain in this terminal. In dual transceiver chain terminals, there are two transceiver chains, one for each network. However, as shown in figure 2, the GSM-1800 Rx band is close to the UMTS-2100 Tx band and therefore it is possible to have noise and coupling between the two antennas during GSM reception due to the UMTS transmission. So it is necessary to apply compress mode in the UMTS UL when performing DL measurements in the GSM network at 1800 MHz.

As it was mentioned before there are different types of compress mode such as compress mode by spreading factor reduction. With this type of compress mode the transmitter stops transmitting for a number of slots and before and after the transmission gap it transmits with lower spreading factor or higher bit rate in order to keep the total bit rate same as the Quality of Service (QoS) requirements of the network (please refer to Figure 1). In the following some of the disadvantages of this scheme are given:

By using this method the interference to the current signal is increased after and before the transmission gap.

During the transmission gap there is no power control running in the current system for this transceiver and therefore the power transmitted after the transmission gap may be higher or lower than the required, one. If it is higher the system allocates for this user more bandwidth than the necessary, if it is lower the quality of the connection is degraded.

In the following we will concentrate on the use of compress mode in the UL for dual transceiver chain terminals. The compress mode types that can be used in the UL are the compress mode by Spreading factor reduction and the compress mode by higher layer scheduling and compress mode by puncturing. Higher layer scheduling and compress mode by puncturing are rather complicated methods to apply. Moreover, compress mode methods were only finalised very recently in the standards and it may not be possible for all mobile terminals to be able to use them as they are considered too complicated. Furthermore, the development activities are mainly concentrated on allowing the mobile to establish the call and perform some basic functionality, and since compress mode is complicated, it may not be possible for mobile terminals to apply compress mode at first. WO01/26248 teaches a system for mobile transmissions where a receiver is coupled to a transmitter, and having more than one subreceivers, each being independently tuned for a different frequency.

EP0926838 teaches a system permitting simultaneous transmissions and switching between transmissions, without high power dissipation.

### Summary of the Invention

The present invention provides a portable telecommunications terminal having antenna means for receiving and transmitting voice signals and/or data over mobile telecommunications networks, and signal processing means for encoding input voice signals and/or data for transmission and decoding received signals, characterised in that the terminal has two or more transceiver chains servicing a different mobile telecommunication network, the transceiver chains having receiving and transmitting components connected to the antenna means, the transceiver chains operable simultaneously, each on a different frequency band; the different frequency bands of the transceiver chains being close frequency bands spaced apart 300Mhz or less and the antenna means includes a dielectric resonator antenna for providing isolation between the close frequency bands of the respective transceiver chains.

The use of a Dielectric Resonator Antenna (DRA) system enables communication to different networks to be carried out simultaneously. For example, target network signal quality checks can be made on a GSM network while communication in a UMTS network continues without the use of compress mode. Since DRAs can provide high isolation between frequencies and reduce the coupling loss between the antennas when operating on frequency bands close i.e. GSM 1800 and UMTS 2100 MHz UL frequency, the measurements will be accurate, due to the reduction of the noise between the frequencies used by different networks.

Dielectric Resonator Antennas are antennas with high radiation efficiency and are a good match to most commonly used transmission lines and they are small in size. The configuration of the majority of the DRAs presented today is that of a slab of dielectric material mounted on a ground plane excited by either an aperature feed in the ground plane or by a probe inserted into the dielectric material. Moreover, there are reports of steerable beam DRAs. Apart from their good matching, small size and efficient radiation, the DRAs can provide a good isolation between frequencies.

In dual transceiver chain terminals, both transceivers will be connected to a DRA: It is proposed to use DRAs in dual transceiver chain terminals to improve the isolation between the signals of different networks, thus reducing the noise and therefore making the use of compress mode redundant.

### Brief Description of the Drawings

An embodiment of the invention will now be described by way of example only and with reference to the accompanying drawings in which:
Figure 1 is a graphical representation of the compress mode method as used in the prior art.
Figure 2 indicates the proximity of the frequencies of the Rx band of GSM and the Tx band of UMTS.
Figure 3 is a block diagram of a portable telecommunications terminal according to the present invention.

### Description of the preferred embodiment of the Invention

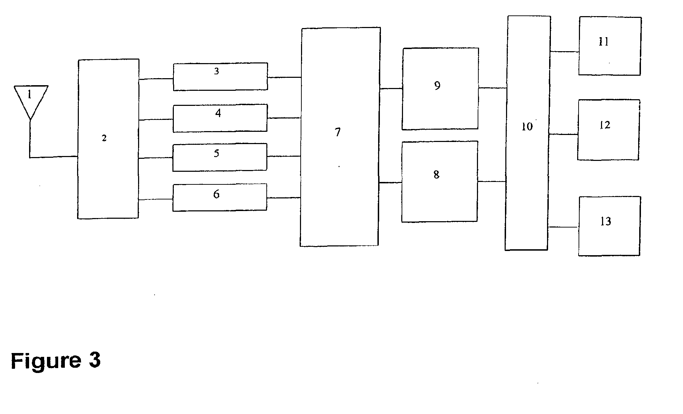

Figure 3 is a block diagram of the preferred embodiment of the present invention. The portable telecommunication terminal of figure 3 preferably includes a microphone 11 and a speaker 12 for respectively inputting and outputting voice signals and a data connection 13 for inputting and outputting data signals. Input voice and data signals are passed on to processing means 10 which readies the input signals for further processing by either GSM signal processing circuitry 9 or UMTS signal processing circuitry 8. Once an input voice and/or data signal has been processed by processing means 10, it is passed onto either the GSM signal processing circuitry 9 or the UMTS signal processing circuitry 8 dependent upon the network which the portable telecommunication terminal is currently using i.e. the network over which the voice/data signal is to be transmitted. In both cases the signal is then passed to the UMTS/GSM system baseband interface circuitry 7 to be readied for the transmitting circuitry of the portable telecommunications terminal. If the portable telecommunications terminal is connected to a GSM network the system baseband will pass the signal to the GSM Tx RF circuitry, 3 and if the portable telecommunication terminal is connected to a UMTS network the system baseband interface circuitry will pass the signal to the UMTS Tx RF circuitry, 5. In both cases the RF signal is then passed to the antenna routing system, 2. Finally the signal is passed to the DRA, 1 for transmission to the network to which the portable telecommunication terminal currently connected.

When a signal is received by the DRA, 1 from the network to which the portable telecommunication terminal is currently connected, the signal is passed through the circuitry of the portable telecommunication terminal in an opposite order to that when transmitting a signal, except that GSM Rx RF circuitry, 4 or UMTS Rx RF circuitry, 6 is used when passing the signal from the antenna routing system, 2 to the UMTS/GSM System Baseband, 7.

The use of a DRA antenna allows the System Baseband to check the quality of the signals exchanged with the network which the portable telecommunication terminal is not using without interrupting communication with the network to which the portable telecommunication terminal is using. Since the terminal has the ability to perform measurements of the target system continuously, it can report the measurements to the network and the network will decide or not to command the switch of the mobile terminal from the current system to the target one.

Various schemes for switching are possible. It may be desirable for a terminal periodically to check the available quality of the "other" network whenever it is switched on. Alternatively such checks may take place only if the quality of the network currently being used deteriorates.

## Claims

1. A portable telecommunications terminal having antenna means (1) for receiving and transmitting voice signals and/or data over mobile telecommunications networks, and signal processing means (10) for encoding input voice signals and/or data for transmission and decoding received signals, wherein: the terminal has two or more transceiver chains, each chain servicing a different mobile telecommunication network, the transceiver chains having receiving and transmitting components (3, 4, 5, 6) connected to the antenna means, the transceiver chains being operable simultaneously, each on a different frequency band; the different frequency bands of the transceiver chains being close frequency bands spaced apart 300Mhz or less, wherein the transceiver chains include a first transceiver chain for transmitting and receiving GSM signals and a second transceiver chain for transmitting and receiving UMTS signals and the antenna means (1) includes a dielectric resonator antenna for providing isolation between the close frequency bands of the respective transceiver chains; and the terminal including means for determining signal quality on a target network during use of a first network, for deciding whether to switch the terminal from the first network to the target network.

2. A terminal as claimed in claim 1 in which the two or more transceiver chains are operable simultaneously to receive signals transmitted simultaneously over the different frequency bands whilst simultaneously transmitting on a selected one of the frequency bands.

3. A terminal as claimed in claim 2 including measuring means for performing measurements on signals received over the respective frequency bands.

4. A terminal as claimed in claim 3 in which the measuring means is operable to perform measurements on signals received over one of the frequency bands at the same time as the terminal is receiving and transmitting signals over another frequency band.

5. A terminal as claimed in claim 3 or 4 in which the selected frequency band is selected in response to a signal from said measuring means.

6. A terminal as claimed in claim in any preceding claim in which the transceiver chains include a first transceiver chain for transmitting and receiving GSM signals and a second transceiver chain for transmitting and receiving UMTS signals.

7. A terminal as claimed in any preceding claim in including two transceiver chains operable to transmit and receive signals on respective frequency bands spaced apart by 175Mhz or less.

## Patentansprüche

1. Tragbares Telekommunikationsendgerät mit einem Antennenmittel (1) zum Empfangen und Senden von Sprachsignalen und/oder Daten über Mobiltelekommunikationsnetze und ein Signalverarbeitungsmittel (10) zum Codieren von eingegebenen Sprachsignalen und/oder Daten zum Senden und zum Decodieren empfangener Signale, wobei das Endgerät zwei oder mehr Transceiverketten hat, wobei jede Kette ein anderes Mobiltelekommunikationsnetz bedient, wobei die Transceiverketten Empfangs- und Sendekomponenten (3, 4, 5, 6) haben, die mit dem Antennenmittel verbunden sind, wobei die Transceiverketten gleichzeitig betrieben werden können, jeweils auf einem anderen Frequenzband, die verschiedenen Frequenzbänder der Transceiverketten eng benachbarte Frequenzbänder mit einer Beabstandung von 300 MHz oder weniger voneinander sind, wobei die Transceiverketten eine erste Transceiverkette zum Senden und Empfangen von GSM-Signalen und eine zweite Transceiverkette zum Senden und Empfangen von UMTS-Signalen beinhalten und das Antennenmittel (1) eine dielektrische Resonatorantenne zum Bereitstellen der Isolation zwischen den eng benachbarten Frequenzbändern der jeweiligen Transceiverketten beinhaltet und das Endgerät Mittel zum Ermitteln der Signalqualität in einem Zielnetz während der Benutzung eines ersten Netzes zum Bestimmen, ob das Endgerät von dem ersten Netz auf das Zielnetz umgeschaltet werden soll, beinhaltet.

2. Endgerät nach Anspruch 1, bei dem die zwei oder mehr Transceiverketten gleichzeitig betrieben werden können, um über die verschiedenen Frequenzbänder gleichzeitig gesendete Signale zu empfangen, während sie gleichzeitig auf einem ausgewählten der Frequenzbänder senden.

3. Endgerät nach Anspruch 2, das ein Messmittel zum Durchführen von Messungen an über die jeweiligen Frequenzbänder empfangenen Signalen beinhaltet.

4. Endgerät nach Anspruch 3, bei dem das Messmittel zum Durchführen von Messungen an über eines der Frequenzbänder empfangenen Signalen zur gleichen Zeit, zu der das Endgerät Signale über ein anderes Frequenzband empfängt und sendet, funktionell ist.

5. Endgerät nach Anspruch 3 oder 4, wobei das ausgewählte Frequenzband als Reaktion auf ein Signal von dem genannten Messmittel ausgewählt wird.

6. Endgerät nach einem der vorhergehenden Ansprüche, bei dem die Transceiverketten eine erste Transceiverkette zum Senden und Empfangen von GSM-Signalen und eine zweite Transceiverkette zum Senden und Empfangen von UMTS-Signalen beinhalten.

7. Endgerät nach einem der vorhergehenden Ansprüche, das zwei Transceiverketten beinhaltet, die zum Senden und Empfangen von Signalen auf jeweiligen Frequenzbändern funktionell sind, die 175 MHz oder weniger voneinander beabstandet sind.

## Revendications

1. Terminal de télécommunications portable possédant des moyens d'antenne (1) pour recevoir et transmettre des signaux vocaux et/ou des données par l'intermédiaire de réseaux de télécommunications mobiles, et des moyens de traitement de signaux (10) pour coder des signaux vocaux et/ou des données d'entrée en vue d'une transmission, et pour décoder des signaux reçus, cas dans lequel le terminal possède deux ou plusieurs chaînes d'émetteurs-récepteurs, chaque chaîne desservant un réseau de télécommunications mobiles différent, les chaînes d'émetteurs-récepteurs possédant des composants de réception et de transmission (3, 4, 5, 6) lesquels sont connectés aux moyens d'antenne, les chaînes d'émetteurs-récepteurs étant aptes à fonctionner simultanément, chacune sur une bande de fréquence différente ; les différentes bandes de fréquence des chaînes d'émetteurs-récepteurs étant des bandes de fréquence proches espacées de 300 MHz ou moins, cas dans lequel les chaînes d'émetteurs-récepteurs comportent une première chaîne d'émetteurs-récepteurs pour transmettre et recevoir des signaux GSM et une deuxième chaîne d'émetteurs-récepteurs pour transmettre et recevoir des signaux UMTS, et les moyens d'antenne (1) comportent une antenne à résonateur diélectrique pour procurer un isolement entre les bandes de fréquence proches pour les chaînes d'émetteurs-récepteurs respectives ; et le terminal englobant des moyens pour déterminer une qualité de signal sur un réseau cible au cours de l'utilisation d'un premier réseau, pour décider si le terminal doit être commuté du premier réseau vers le réseau cible.

2. Terminal selon la revendication 1, dans lequel les deux ou plusieurs chaînes d'émetteurs-récepteurs sont exploitables simultanément de façon à recevoir des signaux transmis simultanément sur les différentes bandes de fréquence tout en effectuant simultanément des transmissions sur une bande sélectionnée parmi les bandes de fréquence.

3. Terminal selon la revendication 2, incluant des moyens de mesure pour réaliser des mesures sur des signaux reçus par l'intermédiaire des bandes de fréquence respectives.

4. Terminal selon la revendication 3, dans lequel les moyens de mesure sont exploitables de façon à réaliser des mesures sur des signaux reçus par l'intermédiaire de l'une des bandes de fréquence en même temps que le terminal est en train de recevoir et de transmettre des signaux par l'intermédiaire d'une autre bande de fréquence.

5. Terminal selon la revendication 3 ou 4, dans lequel la bande de fréquence sélectionnée est sélectionnée en réaction à un signal provenant desdits moyens de mesure.

6. Terminal selon l'une quelconque des revendications précédentes, dans lequel les chaînes d'émetteurs-récepteurs comportent une première chaîne d'émetteurs-récepteurs pour transmettre et recevoir des signaux GSM, et une deuxième chaîne d'émetteurs-récepteurs pour transmettre et recevoir des signaux UMTS.

7. Terminal selon l'une quelconque des revendications précédentes, incluant deux chaînes d'émetteurs-récepteurs exploitables de façon à transmettre et à recevoir des signaux sur des bandes de fréquence respectives lesquelles sont espacées de 175 MHz ou moins.
